# EUROPÄISCHE PATENTSCHRIFT

(11) **EP 1 401 677 B1**
(45) Veröffentlichungstag und Bekanntmachung des Hinweises auf die Patenterteilung: **03.05.2006**
(21) Anmeldenummer: 02754719.9
(22) Anmeldetag: 20.06.2002
(51) Int. Cl.: B60N 2/48

(54) **KOPFSTÜZENANORDNUNG FÜR EINEN FAHRZEUGSITZ UND DAMIT AUSGESTATTETER FAHRZEUGSITZ, INSBESONDERE NOTSITZ**
HEADREST ARRANGEMENT FOR A VEHICLE SEAT AND VEHICLE SEAT FITTED WITH SAID HEADREST ARRANGEMENT, PARTICULARLY A SPARE SEAT
DISPOSITIF APPUI-TETE POUR SIEGE DE VEHICULE, SIEGE DE VEHICULE EQUIPE DE CE DISPOSITIF APPUI-TETE, NOTAMMENT SIEGE AUXILIAIRE

(30) Priorität: 22.06.2001 DE 20110342 U
(43) Veröffentlichungstag der Anmeldung: 31.03.2004
(73) Patentinhaber: Johnson Controls GmbH, 51399 Burscheid (DE)
(72) Erfinder: SCHMITT, Daniel, F-67370 Reitwiller (FR); METZ, Daniel, F-6700 Strassburg (FR); SEEL, Oliver, 72108 Rottenburg (DE)
(74) Vertreter: Wolff, Felix
(86) Internationale Anmeldenummer: PCT/EP2002/006828
(87) Internationale Veröffentlichungsnummer: WO 2003/000517

(56) Entgegenhaltungen:
- DE-C- 3 325 927
- DE-C- 4 023 127
- DE-C- 19 821 396
- DE-C- 19 938 881
- DE-U- 29 916 386
- US-A- 4 376 552
- US-A- 5 669 668

## Beschreibung

Die vorliegende Erfindung betrifft eine Kopfstützenanordnung für einen aus einer Rückenlehne und einem unteren Sitzflächenteil bestehenden Fahrzeugsitz, mit einem über Haltemittel mit der Rückenlehne verbundenen bzw. verbindbaren KopfstützteiL

Ferner betrifft die Erfindung auch einen mit einer solchen Kopfstützenanordnung ausgestatteten Fahrzeugsitz, mit einem unteren Sitzflächenteil und einerumlegbaren Rückenlehne.

Es ist bekannt, Fahrzeugsitze mit Kopfstützen zu versehen, die den Sitzbenutzer vor unfallbedingten Verletzungen im Bereich der Halswirbelsäule, d. h. gegen sogenanntes Schleudertrauma (Whiplash) schützen sollen, Dabei ist es ebenfalls hinlänglich bekannt, die Kopfstütze zur Anpassung an verschieden große Benutzer über Haltemittel höhenverstellbar und in unterschiedlichen Positionen arretierbar an oder in der Rückenlehne zu führen.

Fahrzeugsitze sollen in vielen Fällen zur variablen Fahrzeugnutzung zwischen verschiedenen Stellungen veränderbar sein, Dabei bereitet oft vor allem ein Umlegen der Rückenlehne wegen der im oberen Bereich abstehend angeordneten Kopfstütze Probleme hinsichtlich möglicher Kollisionen mit anderen Fahrzeugteilen. Zum Teil muss vor dem Umlegen der Rückenlehne sogar die Kopfstütze gänzlich demontiert werden.

Es ist aus der US-A-4 376 552 eine Kopfstütze bekannt, die über eine Haltestange und einer damit verbundenen Spiralfeder an einer Sitzlehne angeordnet ist, wobei die Spiralfeder in einer Führungsschiene in der Sitzlehne befestigt ist. Durch Herausziehen der Haltestange aus der Führung ist es möglich, diese abzuwinkeln und so die Kopfstütze vor die Lehne zu verschwenken, Des Weiteren ist daraus eine abgewinkelte und über ein Scharnier verschwenkbare Haltestange einer Kopfstütze bekannt.

Der vorliegenden Erfindung liegt die Aufgabe zugrunde, eine Kopfstützenanordnung der genannten Art sowie einen damit ausgerüsteten Sitz zu schaffen, womit eine besonders komfortable Anordnungsänderung des Sitzes und seiner Teile möglich ist.

Die Aufgabe wird erfindungsgemäß gelöst durch eine Kopfstützenanordnung gemäß dem Anspruch 1.

Ein mit einer solchen, erfindungsgemäßen Kopfstützenanordnung ausgestatteter Fahrzeugsitz zeichnet sich gemäss dem Anspruch 14 dadurch aus, dass ausgehend von einer zum Sitzen geeigneten Gebrauchsstellung das Sitzflächenteil derart um eine in seinem vorderen, von der Rückenlehne entfernt liegenden Bereich angeordnete Querachse um etwa 180° umklappbar ist, dass es mit seiner nach oben weisenden Unterseite in einer Ebene mit einem angrenzenden Ladeboden des Fahrzeugs liegt, wobei die Rückenlehne in der Nichtgebrauchsstellung des Kopfstützteils um eine untere Querachse in Richtung des Sitzflächenteils um etwa 90° umlegbar ist und dann mit ihrer Rückfläche ebenfalls etwa in der Ebene des Ladebodens liegt. Dabei werden zweckmäßigerweise einerseits die Rückenlehne zusammen mit dem arretiert in der Nichtgebrauchsstellung liegenden Kopfstützteil in der umgelegten Lehnenstellung und andererseits das untere Sitzflächenteil mit seinem Sitzpolster in der umgekehrten Lage jeweils in einer muldenartigen Aufnahme des Fahrzeugs aufgenommen.

Durch die Erfindung ist ein Überführen zwischen Gebrauchs- und Nichtgebrauchsstellung sehr einfach und komfortabel: eine vollständige Demontage von Teilen, wie insbesondere der Kopfstütze, kann sich erübrigen, so dass auch keine Verlustgefahr besteht, sondem alle Komponenten stehen dem Benutzer im Fahrzeug stets zur variablen Nutzung zur Verfügung. Beim Überführen der Rückenlehne in die umgelegte Lehnenstellung ist die erfindungsgemäße Arretierung des Kopfstützenteils in seiner vor der Rückenlehne liegenden Nichtgebrauchsstellung von besonders vorteilhafter Bedeutung, weil dadurch unkontrollierte Pendelbewegungen und daraus resultierende Probleme beim Einführen bzw. Einlegen des Kopfstützenteils in die zugehörige Aufnahmemulde des Fahrzeugs sicher vermieden werden, ohne dass dabei das Kopfstützenteil umständlich manuell festgehalten bzw. geführt werden müsste,

Weitere vorteilhafte Ausgestaltungsmerkmale und dadurch erreichte Vorteile der Erfindung sind in den vom Anspruch 1 bzw. 15 abhängigen Unteransprüchen sowie der folgenden Beschreibung enthalten.

Anhand eines in der Zeichnung veranschaulichten, bevorzugten Ausführungsbeispiels soll die Erfindung genauer erläutert werden. Dabei zeigen:
- Fig.1: eine schematische, zum Teil geschnittene Seitenansicht eines Fahrzeugsitzes mit einer erfindungsgemäßen Kopfstützenanordnung, wobei gleichzeitig unterschiedliche Stellungen der Bestandteile dargestellt sind,
- Fig. 2: eine vergrößerte Ansicht nur des Kopfstützteils in einer der Fig. 1 entsprechenden Ansicht,
- Fig. 3: eine Vorderansicht des Kopfstützteils in Pfeilrichtung III gemäß Fig. 2 (ebenfalls zum Teil geschnitten bzw. transparent dargestellt),
- Fig. 4: eine schematische Schnittansicht in der Ebene IV - IV gemäß Fig. 3 in unterschiedlichen Stellungen des Kopfstützteils während des Überführens zwischen seinen beiden Stellungen,
- Fig. 5: einen Schnitt in der Ebene V-V gemäß Fig. 3,
- Fig. 6: eine Ansicht analog zu Fig. 3 nur eines inneren Traggehäuses des Kopfstützteils mit dem oberen Bereich eines Haltestangenelementes,
- Fig. 7: einen Schnitt in der Mittelebene VII - VII gemäß Fig. 6,
- Fig. 8: einen Schnitt in der Ebene VIII - VIII gemäß Fig. 6,
- Fig. 9: einen Schnitt in der Ebene IX - IX gemäß Fig. 6,
- Fig. 10: einen weiteren Schnitt in der Ebene X - X gemäß Fig. 6 und
- Fig. 11: eine perspektivische Explosionsdarstellung der funktionswesentlichen Teile der erfindungsgemäßen Kopfstützenanordnung.

In den verschiedenen Figuren der Zeichnung sind gleiche Teile und Komponenten stets mit den gleichen Bezugszeichen versehen, so dass sie in der Regel auch jeweils nur einmal beschrieben sind.

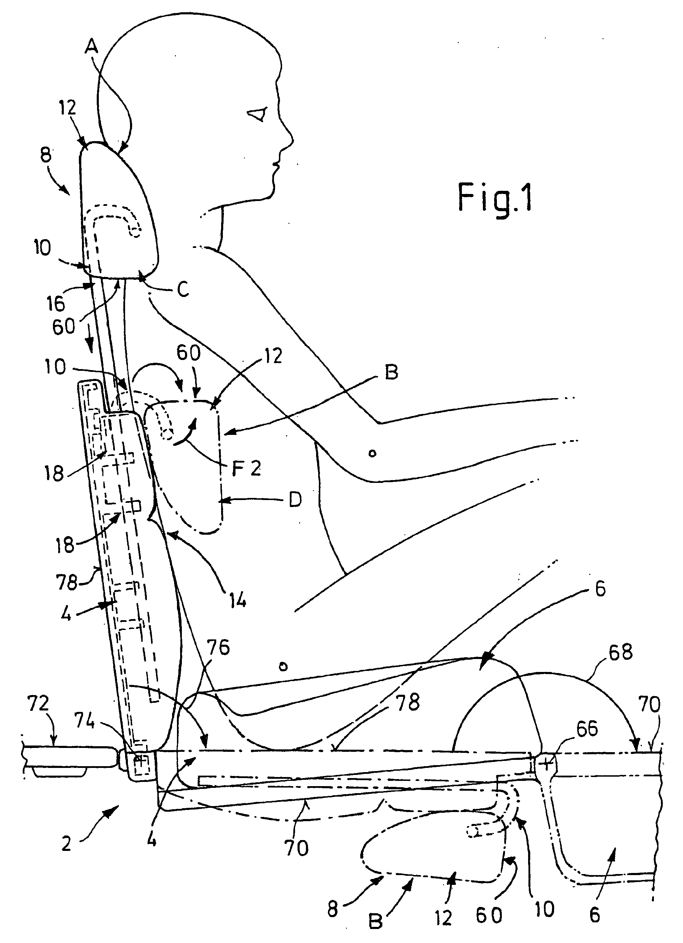

In Fig. 1 ist ein Fahrzeugsitz 2 veranschaulicht, der aus einer Rückenlehne 4 und einem unteren Sitzflächenteil 6 besteht und eine erfindungsgemäße Kopfstützenanordnung 8 aufweist. Mit der Rückenlehne 4 ist über Haltemittel 10 ein Kopfstützteil 12 verbunden bzw. verbindbar.

Wie sich weiterhin aus Fig. 1 entnehmen läßt, sind die Haltemittel 10 derart ausgebildet, dass das Kopfstützteil 12 zwischen einer oberhalb der Rückenlehne 4 entsprechend ihrer Kopf-Stützfunktion angeordneten Gebrauchsstellung A und einer Nichtgebrauchsstellung B überführbar und in beiden Stellungen A, B lösbar arretiert ist. Das Kopfstützteil 12 ist in der Nichtgebrauchsstellung B gegenüber der Gebrauchsstellung A einerseits in Richtung des unteren Sitzflächenteils 6 abgesenkt, sowie andererseits im Bereich einer Lehnenvorderseite 14 vor der Rückenlehne 4 liegend angeordnet. Auf diese Weise wird erfindungsgemäß der in der Gebrauchsstellung A notwendige Überstand des oberhalb der Rückenlehne 4 nach oben stehenden Kopfstützteils 12 beseitigt, indem in der Nichtgebrauchsstellung B keine Teile des Kopfstützteils 12 mehr über die Rückenlehne 4 ragen.

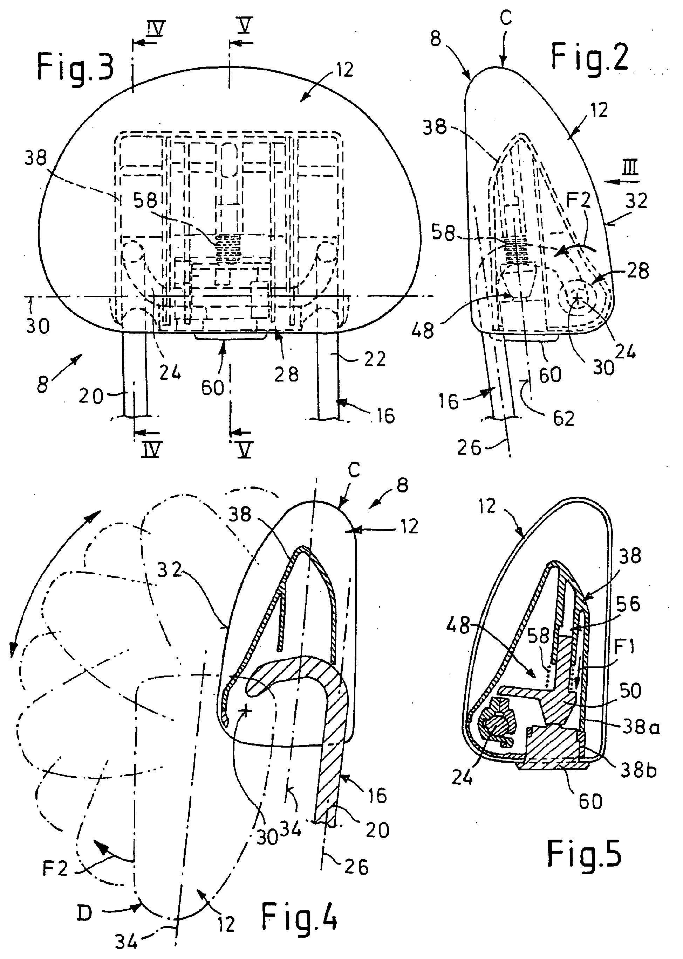

Es ist für die Erfindung zweckmäßig, wenn die Haltemittel 10 ein Haltestangenelement 16 mit zwei zueinander parallelen, in Führungen 18 der Rückenlehne 4 (nur in Fig. 1 erkennbar) längsverschiebbar geführten Haltestangen 20, 22 aufweisen. Die in den Führungen 18 verschiebbaren Haltestangen 20, 22 sind zudem in mindestens zwei, vorzugsweise zur Höhenverstellung in mehreren, verschiedenen Stellungen arretierbar. Die Haltestangen 20, 22 sind in ihrem außerhalb der Rückenlehne 4 und der Führungen 18 liegenden Endbereich insbesondere einstückig über einen Quersteg 24 miteinander verbunden. Dabei sind die Haltestangen 20, 22 in ihrem oberen Endbereich im Übergang zu dem Quersteg 24 derart "spazierstockartig" gekrümmt ausgebildet, dass der Quersteg 24 gegenüber einer durch die beiden parallelen Haltestangen 20, 22 definierten Führungsebene 26 (siehe dazu beispielsweise Fig. 2 und 4) in Richtung der Lehnenvorderseite 14 versetzt angeordnet ist.

Das Kopfstützteil 12 ist über eine Lageranordnung 28 auf dem Quersteg 24 des Haltestangenelementes 16 um eine von dem Quersteg 24 bestimmte bzw. mit der Längsmittelachse des Quersteges 24 identische Drehachse 30 verschwenkbar und in (mindestens) zwei verschiedenen Stellungen arretierbar geführt. In dem bevorzugten Ausführungsbeispiel ist das Kopstützteil 12 um etwa 180° verschwenkbar und alternativ in zwei Stellungen arretierbar, und zwar wahlweise in einer sich etwa in Verlängerung der Haltestangen 20, 22 nach oben erstreckenden Stützstellung C (siehe Fig. 2 und 4) oder in einer sich ausgehend von dem Quersteg 24 umgekehrt nach unten etwa parallel zu den Haltestangen 20, 22 erstreckenden Ruhestellung D (siehe dazu Fig. 4, wo der Vorgang des Umschwenkens zwischen den Stellungen C und D anhand von zahlreichen Zwischenstellungen veranschaulicht ist). Weiterhin ist es für das Überführen des Kopfstützteils 12 von der Gebrauchsstellung A in seine Nichtgebrauchsstellung B (Fig. 1) zweckmäßig, wenn es mit einer etwa parallel zu einer vorderen Kopf-Stützfläche 32 verlaufenden Mittelebene 34 (siehe Fig. 4) derart asymmetrisch zu der Drehachse 30 angeordnet ist, dass es durch das Verschwenken zwischen der Stützstellung C und der Ruhestellung D jeweils gegenüber der Drehachse 30 versetzt wird. In der Stützstellung C liegt die Mittelebene 34 gemäß Fig. 4 hinter der Drehachse 30, und in der Ruhestellung D liegt die Mittelebene 34 vor der Drehachse 30. Dadurch wird das Kopfstützteil 12 beim Absenken durch Einschieben der Haltestangen 20, 22 in die Führungen der Rückenlehne 4 vor die Lehnenvorderseite 14 der Rückenlehne 4 positioniert (Nichtgebrauchsstellung B gemäß Fig. 1).

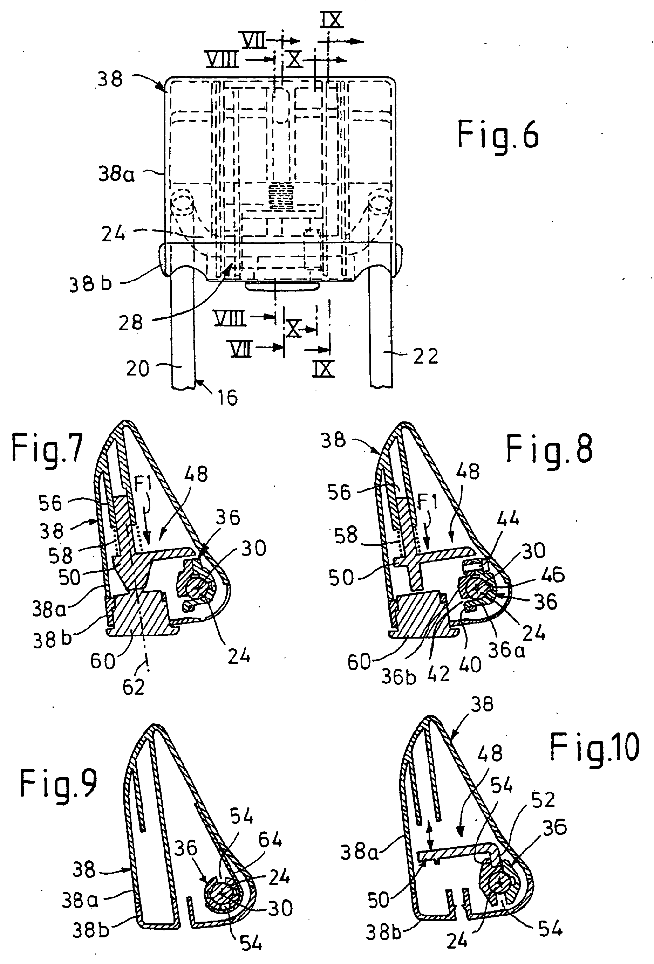

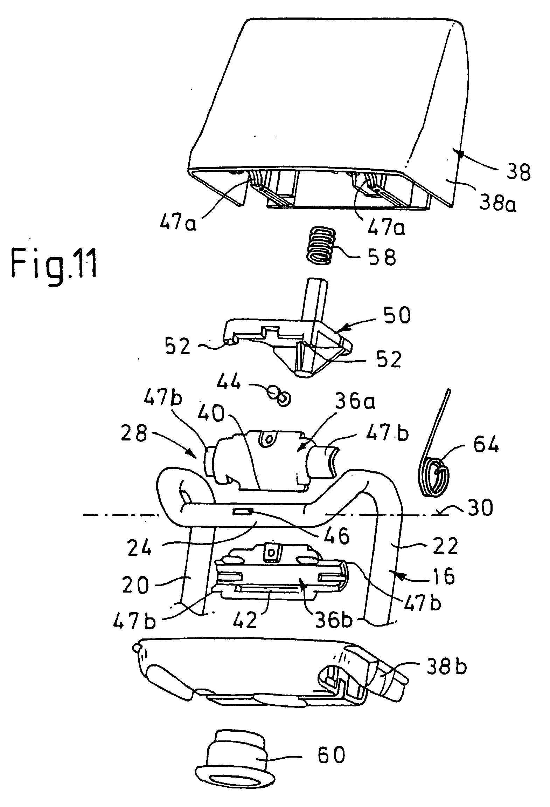

Die Lageranordnung 28 weist ein verdrehfest, d. h. gegen Verdrehen gesichert, auf dem Quersteg 24 des Haltestangenelementes 16 sitzendes Lagerteil 36 auf, auf dem ein inneres Traggehäuse 38 des Kopfstützteils 12 verdrehbar geführt ist. Wie sich aus Fig. 11 ergibt, besteht das Lagerteil 36 zweckmäßigerweise aus zwei Hälften 36a und 36b, die unter Einschluß des Quersteges 24 miteinander verbunden sind. Dies kann einseitig durch formschlüssigen Eingriff eines Haltesteges 40 der einen Lagerteilhälfte 36a in eine korrespondierende Halteöffnung 42 der anderen Lagerteilhälfte 36b erfolgen, wobei anderseitig die beiden Hälften beispielsweise mittels eines Nietes 44 oder dergleichen Verbindungselementes verbunden sind (siehe ergänzend zu Fig. 11 auch Fig. 8). Für den verdrehsicheren Sitz des Lagerteils 36 auf dem Quersteg 24 sind insbesondere Formschlußmittel vorgesehen, beispielsweise gemäß Fig. 11 wenigstens ein vorspringender Ansatz 46 des Quersteges 24, der in eine korrespondierende Aufnahme innerhalb des Lagerteils 36 eingreift (siehe auch Fig. 8). Das Traggehäuse 38 sitzt mit inneren Lagerabschnitten 47a drehbar auf zwei seitlichen Lagerabschnitten 47b des Lagerteils 36 (Fig. 11). Dabei besteht das Traggehäuse 38 aus zwei Gehäuseteilen 38a und 38b, die unter Einschluß des Lagerteils 36 miteinander verbunden, z.B. verschraubt und/oder verrastet, sind.

Innerhalb des Traggehäuses 38 ist eine mit dem Lagerteil 36 zusammenwirkende Arretiereinrichtung 48 für die Stützstellung und die Ruhestellung vorgesehen. Diese Arretiereinrichtung 48 weist einen in dem Traggehäuse 38 verschiebbar geführten Riegelschieber 50 auf, der mit mindestens einem Riegelelement 52 wahlweise in der Stützstellung C oder in der Ruhestellung D in jeweils eine korrespondierende Riegelöffnung 54 des Lagerteils 36 eingreift (siehe dazu insbesondere Fig. 10). Wie sich beispielsweise aus Fig. 5, 7 und 8 ergibt, ist der Riegelschieber 50 in einer innerhalb des Traggehäuses 38 gebildeten Schieberaufnahme 56 geführt. Bevorzugt weist der Riegelschieber 50 zwei seitlich versetzte Riegelelemente 52 auf. Dementsprechend sind auch je zwei Riegelöffnungen 54 für die beiden Stellungen C und D vorgesehen. Der Riegelschieber 50 ist hierbei mit Federkraft F1 in Richtung seiner Arretierstellung beaufschlagt. Gemäß Fig. 5, 7, 8 und 11 ist dazu beispielsweise eine Schraubendruckfeder 58 zwischen dem Riegelschieber 50 und der Schieberaufnahme 56 des Traggehäuses 38 angeordnet.

Der Riegelschieber 50 wirkt mit einem von außen zur vorzugsweise manuellen Druckbetätigung zugänglichen, insbesondere drucktastenartigen Betätigungselement. 60 zusammen. Dieses Betätigungselement 60 ist bevorzugt in einem Bereich des Kopfstützteils 12 angeordnet, der in der Stützstellung C in Richtung der Rückenlehne 4 nach unten bzw. in der Ruhestellung D in entgegengesetzter Richtung nach oben weist. Dadurch ist eine praktische, sehr komfortable Betätigung möglich. Mittels des Betätigungselementes 60 ist der Riegelschieber 50 in Richtung einer Verschiebeachse bzw. -ebene 62 verschiebbar, die in der Stützstellung C im zwischen der Führungsebene 26 der Haltestangen 20, 22 und der Drehachse 30 liegenden Bereich etwa parallel zu der Führungsebene 26 liegend angeordnet ist. Dazu wird insbesondere auf Fig. 2 verwiesen.

Es ist weiterhin vorteilhaft, wenn das Kopfstützteil 12 derart mit einer Rotationsfederkraft F2 beaufschlagt ist, dass - jeweils nach Lösen der Arretierung - das Verschwenken in der einen Drehrichtung gegen die Rotationsfederkraft F2 mit einer diese übersteigenden, äußeren Betätigungskraft (insbesondere manuell) und in der anderen Drehrichtung im wesentlichen selbsttätig durch die Rotationsfederkraft F2 erfolgt. In dem bevorzugten Ausführungsbeispiel ist die Rotationsfederkraft F2 derart gerichtet, dass ausgehend von der Ruhestellung D nach Lösen der Arretierung die Stützstellung C selbsttätig durch die Federkraft F2 erreicht wird. Es liegt allerdings auch eine umgekehrte Variante im Bereich der Erfindung. Wie sich aus Fig. 9 und 11 ergibt, ist zur Erzeugung der Rotationsfederkraft F2 eine beispielsweise als gewundene Schenkelfeder ausgebildete Drehfeder 64 vorgesehen, die koaxial zur Drehachse 30 zwischen dem Kopfstützteil 12 bzw. dem Inneren des Traggehäuses 38 einerseits und dem Haltestangenelement 16 bzw. dem Lagerteil 36 andererseits abgestützt angeordnet ist.

Wie sich weiterhin aus Fig. 1 ergibt, ist die erfindungsgemäße Kopfstützenanordnung 8 bevorzugt für einen solchen Fahrzeugsitz 2 konzipiert, der ebenfalls zwischen einer zum Sitzen geeigneten Gebrauchsstellung und einer Nichtgebrauchsstellung überführbar ist. Zum Überführen in die Nichtgebrauchsstellung ist das Sitzflächenteil 6 derart um eine in seinem vorderen, von der Rückenlehne 4 entfernt liegenden Bereich angeordnete Querachse 66 in Pfeilrichtung 68 um etwa 180° umklappbar, dass es mit seiner dann nach oben weisenden Unterseite 70 etwa in einer Ebene 72 mit einem angrenzenden Ladeboden des Fahrzeugs liegt. Außerdem ist die Rückenlehne 4 in der arretierten Nichtgebrauchsstellung B des Kopfstützteils 12 um eine untere Querachse 74 in Richtung des Sitzflächenteils 6 in Pfeilrichtung 76 um etwa 90° umlegbar, so dass sie dann mit ihrer Rückfläche 78 ebenfalls etwa in der Ebene 72 des Ladebodens liegt. Aufgrund dieser Ausgestaltung wird der Fahrzeugsitz 2 insbesondere als Zusatz-, Not- bzw. Kindersitz verwendet, und zwar insbesondere in einer rückwärts zur eigentlichen Fahrtrichtung ausgerichteten Anordnung im Heckbereich des Fahrzeugs. Die Rückenlehne 4 wird mit dem arretiert in der Nichtgebrauchsstellung B liegenden Kopfstützteil 12 in der umgelegten Lehnenstellung in einer muldenartigen Aufnahme des Fahrzeugs aufgenommen. Entsprechendes gilt auch für das Sitzflächenteil 6, welches in seiner umgelegten Lage mit seiner Polsterung nach unten in einer Bodenmulde liegt. Beide Sitzteile 4, 6 ergänzen dann mit ihren Rück- bzw. Unterseiten 70, 78 die Ladefläche des Fahrzeugs.

Bedingt durch den begrenzten Bauraum im Heckbereich des Fahrzeugs kann die Rückenlehne 4 eines solchen Notsitzes nur relativ niedrig bzw. kurz ausgeführt sein. Die Rückenlehne 4 reicht mit ihrer Oberkante bei dem in Fig. 1 veranschaulichten Dummy einer sogenannten 5%-Frau nur bis etwa an die unteren Ränder der Schulterblätter heran. Deshalb ist die erfindungsgemäße Kopfstützenanordnung 8 erforderlich, um dem Insassen in seiner rückwärts gewendeten Sitzposition bei Bremsmanövern ausreichenden Halt im Kopf- und Halsbereich zu bieten.

## Patentansprüche

1. Kopfstützenanordnung (8) für einen aus einer Rückenlehne (4) und einem unteren Sitzflächenteil (6) bestehenden Fahrzeugsitz (2), mit einem über Haltemittel (10) mit der Rückenlehne (4) verbundenen bzw. verbindbaren Kopfstützteil (12), wobei die Haltemittel (10) derart ausgebildet sind, dass das Kopfstützteil (12) zwischen einer oberhalb der Rückenlehne (4) entsprechend ihrer Kopf-Stützfunktion angeordneten Gebrauchsstellung (A) und einer Nichtgebrauchsstellung (B) überführbar und in beiden Stellungen lösbar arretiert ist, wobei das Kopfstützteil (12) in der Nichtgebrauchsstellung (B) gegenüber der Gebrauchsstellung (A) einerseits in Richtung des Sitzflächenteils (6) abgesenkt und andererseits im Bereich einer Lehnenvorderseite (14) vor der Rückenlehne (4) liegend angeordnet ist, wobei die Haltemittel (10) ein Haltestangenelement (16) mit zwei zueinander parallelen, in Führungen (18) der Rückenlehne (4) längsverschiebbar geführten Haltestangen (20, 22) aufweisen, wobei die Haltestangen (20, 22) in ihrem außerhalb der Führungen (18) liegenden Endbereich insbesondere einstückig über einen Quersteg (24) verbunden sind, wobei die Haltestangen (20, 22) in ihrem Endbereich derart gekrümmt sind, dass der Quersteg (24) gegenüber einer durch die beiden parallelen Haltestangen (20, 22) definierten Führungsebene (26) in Richtung der Lehnenvorderseite (14) versetzt angeordnet ist, **dadurch gekennzeichnet, dass** das Kopfstützteil (12) über eine Lageranordnung (28) auf dem Quersteg (24) des Haltestangenelementes (16) um eine von dem Quersteg (24) bestimmte Drehachse (30) verschwenkbar geführt ist und beim Absenken durch Einschieben der Haltestangen (20, 22) in die Führungen der Rückenlehne (4) vor der Lehnenvorderseite (14) der Rückenlehne (4) positionierbar ist.

2. Kopfstützenanordnung nach Anspruch 1, **dadurch gekennzeichnet, dass** das Kopfstützteil (12) in mindestens zwei verschiedenen Stellungen arretierbar ist.

3. Kopfstützenanordnung nach Anspruch 1 oder 2, **dadurch gekennzeichnet, dass** die Haltestangen (20, 22) in mindestens zwei verschiedenen Stellungen arretierbar sind.

4. Kopfstützenanordnung nach einem der voranstehenden Ansprüche, **dadurch gekennzeichnet, dass** das Kopfstützteil (12) um etwa 180° verschwenkbar und alternativ in zwei Stellungen arretierbar ist, und zwar in einer sich etwa in Verlängerung der Haltestangen (20, 22) erstreckenden Stützstellung (C) oder in einer sich ausgehend von dem Quersteg (24) umgekehrt etwa parallel zu den Haltestangen (20, 22) erstreckenden Ruhestellung (D).

5. Kopfstützenanordnung nach Anspruch 4, **dadurch gekennzeichnet, dass** das Kopfstützteil (12) mit einer etwa parallel zu einer Kopf-Stützfläche (32) verlaufenden Mittelebene (34) derart asymmetrisch zu der Drehachse (30) angeordnet ist, dass es durch das Verschwenken zwischen der Stützstellung (C) und der Ruhestellung (D) jeweils gegenüber der Drehachse (30) versetzt wird.

6. Kopfstützenanordnung nach einem der Ansprüche 1 bis 5, **dadurch gekennzeichnet, dass** die Lageranordnung (28) ein verdrehfest auf dem Quersteg (24) des Haltestangenelements (16) sitzendes Lagerteil (36) aufweist, auf dem ein Traggehäuse (38) des Kopfstützteils (12) verdrehbar geführt ist, wobei in dem Traggehäuse (38) eine mit dem Lagerteil (36) zusammenwirkende Arretiereinrichtung (48) für die Stütz- und Ruhestellungen vorgesehen ist.

7. Kopfstützenanordnung nach Anspruch 6, **dadurch gekennzeichnet, dass** die Arretiereinrichtung (48) einen in dem Traggehäuse (38) verschiebbar geführten Riegelschieber (50) aufweist, der mit mindestens einem Riegelelement (52) wahlweise in der Stützstellung (C) oder in der Ruhestellung (D) in jeweils eine korrespondierende Riegelöffnung (54) des Lagerteils (36) eingreift.

8. Kopfstützenanordnung nach Anspruch 7, **dadurch gekennzeichnet, dass** der Riegelschieber (50) mit Federkraft (F1) in Richtung seiner Arretierstellung beaufschlagt ist.

9. Kopfstützenanordnung nach Anspruch 7 oder 8, **dadurch gekennzeichnet, dass** der Riegelschieber (50) mit einem von außen zur vorzugsweise manuellen Druckbetätigung zugänglichen, insbesondere drucktastenartigen Betätigungselement (60) zusammenwirkt, wobei das Betätigungselement (60) bevorzugt in einem Bereich des Kopfstützteils (12) angeordnet ist, der in der Stützstellung (C) in Richtung der Rückenlehne (4) nach unten bzw. in der Ruhestellung (D) in entgegengesetzter Richtung nach oben weist.

10. Kopfstützenanordnung nach einem der Ansprüche 7 bis 9, **dadurch gekennzeichnet, dass** der Riegelschieber (50) in Richtung einer Verschiebeachse bzw. -ebene (62) verschiebbar ist, die in der Stützstellung (C) im zwischen der Führungsebene (26) der Haltestangen (20, 22) und der Drehachse (30) liegenden Bereich etwa parallel zur Führungsebene (26) liegend angeordnet ist.

11. Kopfstützenanordnung nach einem der Ansprüche 1 bis 10, **dadurch gekennzeichnet, dass** das Kopfstützteil (12) derart mit einer Rotationsfederkraft (F2) beaufschlagt ist, dass das Verschwenken in der einen Drehrichtung gegen die Rotationsfederkraft (F2) und in der anderen Drehrichtung im Wesentlichen selbsttätig durch die Rotationsfederkraft (F2) erfolgt.

12. Kopfstützenanordnung nach Anspruch 11, **dadurch gekennzeichnet, dass** die Rotationsfederkraft (F2) derart ausgelegt ist, dass ausgehend von der Ruhestellung (D) nach Lösen der Arretierung die Stützstellung (C) selbsttätig erreicht wird.

13. Kopfstützenanordnung nach Anspruch 11 oder 12, **dadurch gekennzeichnet, dass** zur Erzeugung der Rotationsfederkraft (F2) eine bevorzugt als gewundene Schenkelfeder ausgebildete Drehfeder (64) vorgesehen ist, die zwischen dem Kopfstützteil (12) und dem Haltestangenelement (16) bzw, dem Lagerteil (36), abgestützt angeordnet ist.

14. Fahrzeugsitz (2) mit einem unteren Sitzflächenteil (6) und einer Rückenlehne (4) sowie mit einer Kopfstützenanordnung (8) nach einem der Ansprüche 1 bis 13, **dadurch gekennzeichnet, dass** der Fahrzeugsitz (2) zwischen einer zum Sitzen geeigneten Gebrauchsstellung und einer Nichtgebrauchsstellung überführbar ist, wobei das Sitzflächenteil (6) derart um eine in seinem vorderen, von der Rückenlehne (4) entfernt liegenden Bereich angeordnete Querachse (66) um etwa 180° umklappbar ist, dass es mit seiner dann nach oben weisenden Unterseite (70) etwa in einer Ebene (72) mit einem angrenzenden Ladeboden des Fahrzeugs liegt, und wobei die Rückenlehne (4) in der arretierten Nichtgebrauchsstellung (B) des Kopfstützteils (12) um eine untere Querachse (74) in Richtung des Sitzflächenteils (6) um etwa 90° umlegbar ist und dann mit ihrer Rückfläche (78) ebenfalls etwa in der Ebene (72) des Ladebodens liegt.

15. Fahrzeugsitz nach Anspruch 14, **dadurch gekennzeichnet, dass** die Rückenlehne (4) mit dem arretiert in der Nichtgebrauchsstellung (B) liegenden Kopfstützteil (12) in der umgelegten Lehnenstellung in einer muldenartigen Aufnahme des Fahrzeugs aufgenommen wird.

16. Fahrzeugsitz nach Anspruch 14 oder 15, **dadurch gekennzeichnet, dass** in der Nichtgebrauchsstellung die nach oben weisenden Flächen (70, 78) von Sitzflächenteil (6) und Rückenlehne (4) bündig über nur einen geringen Spalt ineinander und in die angrenzenden Flächenbereiche des Ladebodens übergehen.

17. Fahrzeugsitz nach einem der Ansprüche 14 bis 16, **gekennzeichnet durch** eine Verwendung als Notsitz, insbesondere in einer rückwärts zur eigentlichen Fahrtrichtung ausgerichteten Anordnung im Heckbereich des Fahrzeugs.

## Claims

1. Head restraint arrangement (8) for a vehicle seat (2) comprising a backrest (4) and a lower seat surface part (6), having a head-supporting part (12) which is connected or can be connected to the backrest (4) via retaining means (10), the retaining means (10) being designed in such a manner that the head-supporting part (12) can be transferred between an operative position (A), which is arranged in accordance with its head-supporting function above the backrest (4), and an inoperative position (B) and is locked releasably in both positions, the head-supporting part (12), in the inoperative position (B), firstly being lowered relative to the operative position (A) in the direction of the seat surface part (6) and, secondly, being arranged lying in the region of a backrest front side (14) in front of the backrest (4), the retaining means (10) having a retaining-rod element (16) having two retaining rods (20, 22) which are parallel to each other and are guided in a longitudinally displaceable manner in guides (18) of the backrest (4), the retaining rods (20, 22) being connected, in particular in one piece via a transverse web (24), in their end region which is situated outside the guides (18), the retaining rods (20, 22) being curved in their end region in such a manner that the transverse web (24) is arranged offset with respect to a guide plane (26), which is defined by the two parallel retaining rods (20, 22), in the direction of the backrest front side (14), **characterized in that** the head-supporting part (12) is guided via a bearing arrangement (28) on the transverse web (24) of the retaining-rod element (16) in a manner such that it can be pivoted about an axis of rotation (30) defined by the transverse web (24) and can be positioned as it is being lowered by pushing the retaining rods (20, 22) into the guides of the backrest (4), in front of the backrest front side (14) of the backrest (4).

2. Head restraint arrangement according to Claim 1, **characterized in that** the head-supporting part (12) can be locked in at least two different positions.

3. Head restraint arrangement according to Claim 1 or 2, **characterized in that** the retaining rods (20, 22) can be locked in at least two different positions.

4. Head restraint arrangement according to one of the preceding claims, **characterized in that** the head-supporting part (12) can be pivoted through approximately 180° and can be locked alternatively in two positions, specifically in a supporting position (C) extending approximately as an elongation of the retaining rods (20, 22) or in a rest position (D) which, starting from the transverse web (24), extends in an inverted manner approximately parallel to the retaining rods (20, 22).

5. Head restraint arrangement according to Claim 4, **characterized in that** the head-supporting part (12) is arranged with a central plane (34), which runs approximately parallel to a head-supporting surface (32), asymmetrically with respect to the axis of rotation (30) in such a manner that the pivoting between the supporting position (C) and the rest position (D) causes it to be offset in each case with respect to the axis of rotation (30).

6. Head restraint arrangement according to one of Claims 1 to 5, **characterized in that** the bearing arrangement (28) has a bearing part (36) which sits in a rotationally fixed manner on the transverse web (24) of the retaining-rod element (16) and on which a supporting housing (38) of the head-supporting part (12) is guided rotatably, a locking device (48) which interacts with the bearing part (36) and is intended for the supporting and rest positions being provided in the supporting housing (38).

7. Head restraint arrangement according to Claim 6, **characterized in that** the locking device (48) has a bolt slide (50) which is guided displaceably in the supporting housing (38) and uses at least one bolt element (52) to engage, either in the supporting position (C) or in the rest position (D), in a respectively corresponding bolt opening (54) in the bearing part (36).

8. Head restraint arrangement according to Claim 7, **characterized in that** the bolt slide (50) is acted upon with a spring force (F1) in the direction of its locking position.

9. Head restraint arrangement according to Claim 7 or 8, **characterized in that** the bolt slide (50) interacts with an actuating element (60) which is accessible from the outside for, preferably, manual actuation by pushing, in particular an actuating element in the manner of a push-button, the actuating element (60) preferably being arranged in a region of the head-supporting part (12) which, in the supporting position (C), points downward in the direction of the backrest (4) and, in the rest position (D), points upward in the opposite direction.

10. Head restraint arrangement according to one of Claims 7 to 9, **characterized in that** the bolt slide (50) can be displaced in the direction of a displacement axis or displacement plane (62) which, in the supporting position (C), is arranged lying approximately parallel to the guide plane (26), in the region situated between the guide plane (26) of the retaining rods (20, 22) and the axis of rotation (30).

11. Head restraint arrangement according to one of Claims 1 to 10, **characterized in that** the head-supporting part (12) is acted upon with a rotational spring force (F2) in such a manner that the pivoting in the one direction of rotation takes place counter to the rotational spring force (F2) and takes place in the other direction of rotation essentially automatically by means of the rotational spring force (F2).

12. Head restraint arrangement according to Claim 11, **characterized in that** the rotational spring force (F2) is configured in such a manner that, starting from the rest position (D), the supporting position (C) is automatically reached after the lock is released.

13. Head restraint arrangement according to Claim 11 or 12, **characterized in that**, in order to produce the rotational spring force (F2), a torsion spring (64) is provided which is preferably designed as a coiled leg spring and is arranged supported between the head-supporting part (12) and the retaining-rod element (16) or the bearing part (36).

14. Vehicle seat (2) having a lower seat surface part (6) and a backrest (4) and having a head restraint arrangement (8) according to one of Claims 1 to 13, **characterized in that** the vehicle seat (2) can be transferred between an operative position, which is suitable for sitting, and an inoperative position, it being possible for the seat surface part (6) to be folded over through approximately 180° about a transverse axis (66), which is arranged in its front region away from the backrest (4), in such a manner that it lies with its lower side (70), which then points upward, approximately in a plane (72) with an adjacent loading floor of the vehicle, and it being possible, in the locked inoperative position (B) of the head-supporting part (12), for the backrest (4) to be folded over through approximately 90° about a lower transverse axis (74) in the direction of the seat surface part (6), and it then lying with its rear surface (78) likewise approximately in the plane (72) of the loading floor.

15. Vehicle seat according to Claim 14, **characterized in that** the backrest (4) with the head-supporting part (12) situated locked in the inoperative position (B) is accommodated, in the folded-over position of the backrest, in a trough-like receptacle of the vehicle.

16. Vehicle seat according to Claim 14 or 15, **characterized in that**, in the inoperative position, the upwardly pointing surfaces (70, 78) of the seat surface part (6) and backrest (4) merge flush, via just a small gap, in each other and in the adjacent surface regions of the loading floor.

17. Vehicle seat according to one of Claims 14 to 16, **characterized by** being used as a spare seat, in particular in an arrangement in the rear region of the vehicle, in which it is oriented rearward with respect to the actual direction of travel.

## Revendications

1. Dispositif appui-tête (8) pour un siège de véhicule (2) constitué d'un dossier (4) et d'une partie d'assise inférieure (6), comprenant une partie d'appui-tête (12) connectée ou pouvant être connectée au dossier (4) par le biais de moyens de fixation (10), les moyens de fixation (10) étant réalisés de telle sorte que la partie d'appui-tête (12) puisse passer d'une position d'utilisation (A) disposée au-dessus du dossier (4) de manière correspondant à sa fonction d'appui-tête et une position de non utilisation (B) et qu'elle puisse être bloquée de manière desserrable dans les deux positions, la partie d'appui-tête (12) étant, dans la position de non utilisation (B) par rapport à la position d'utilisation (A), d'une part abaissée dans la direction de la partie d'assise (6) et d'autre part étant couchée dans la région d'un côté avant du dossier (14) devant le dossier (4), les moyens de fixation (10) présentant un élément à tiges de retenue (16) avec deux tiges de retenue (20, 22) parallèles l'une à l'autre et guidées de manière déplaçable en longueur dans des glissières (18) du dossier (4), les tiges de retenue (20, 22) étant connectées dans leur région d'extrémité située en dehors des glissières (18) notamment d'une seule pièce par le biais d'une traverse (24), les tiges de retenue (20, 22) étant courbées dans leur région d'extrémité de telle sorte que la traverse (24) soit disposée de manière décalée dans la direction du côté avant du dossier (14) par rapport à un plan de guidage (26) défini par les deux tiges de retenue parallèles (20, 22), **caractérisé en ce que** la partie d'appui-tête (12) est guidée de manière pivotante par le biais d'un agencement de palier (28) sur la traverse (24) de l'élément à tiges de retenue (16) autour d'un axe de rotation (30) défini par la traverse (24) et peut être positionnée lors de l'abaissement par insertion des tiges de retenue (20, 22) dans les glissières du dossier (4) devant le côté avant (14) du dossier (4).

2. Dispositif appui-tête selon la revendication 1, **caractérisé en ce que** la partie d'appui-tête (12) peut être bloquée dans au moins deux positions différentes.

3. Dispositif appui-tête selon la revendication 1 ou 2, **caractérisé en ce que** les tiges de retenue (20, 22) peuvent être bloquées dans au moins deux positions différentes.

4. Dispositif appui-tête selon l'une quelconque des revendications précédentes, **caractérisé en ce que** la partie d'appui-tête (12) peut pivoter d'environ 180° et peut être bloquée alternativement dans deux positions, à savoir dans une position de support (C) s'étendant approximativement dans le prolongement des tiges de retenue (20, 22) ou dans une position de repos (D) s'étendant dans le sens inverse approximativement parallèlement aux tiges de retenue (20, 22) depuis la traverse (24).

5. Dispositif appui-tête selon la revendication 4, **caractérisé en ce que** la partie d'appui-tête (12) est disposée avec un plan médian (34) s'étendant approximativement parallèlement à une surface d'appui-tête (32) asymétriquement par rapport à l'axe de rotation (30), de telle sorte qu'elle soit décalée par rapport à l'axe de rotation (30) à chaque fois par pivotement entre la position de support (C) et la position de repos (D).

6. Dispositif appui-tête selon l'une quelconque des revendications 1 à 5, **caractérisé en ce que** l'agencement de palier (28) présente une partie de palier (36) reposant de manière fixe en rotation sur la traverse (24) de l'élément à tiges de retenue (16), sur laquelle est guidé de manière rotative un boîtier de support (38) de la partie d'appui-tête (12), un dispositif de blocage (48) pour les positions de support et de repos, coopérant avec la partie de palier (36), étant prévu dans le boîtier de support (38).

7. Dispositif appui-tête selon la revendication 6, **caractérisé en ce que** le dispositif de blocage (48) présente un coulisseau de verrouillage (50) guidé de manière déplaçable dans le boîtier de support (38), lequel vient en prise avec au moins un élément de verrouillage (52) de manière sélective dans la position de support (C) ou dans la position de repos (D) dans une ouverture de verrouillage correspondante respective (54) de la partie de palier.

8. Dispositif appui-tête selon la revendication 7, **caractérisé en ce que** le coulisseau de verrouillage (50) est sollicité avec une force de ressort (F1) dans la direction de sa position de blocage.

9. Dispositif appui-tête selon la revendication 7 ou 8, **caractérisé en ce que** le coulisseau de verrouillage (50) coopère avec un élément d'actionnement (60) accessible depuis l'extérieur en vue d'un actionnement par pression de préférence manuel, notamment du type à bouton poussoir, l'élément d'actionnement (60) étant disposé de préférence dans une région de la partie d'appui-tête (12) qui est tournée en position de support (C) vers le bas dans la direction du dossier (4) et vers le haut dans la direction opposée dans la position de repos (D).

10. Dispositif appui-tête selon l'une quelconque des revendications 7 à 9, **caractérisé en ce que** le coulisseau de verrouillage (50) peut être déplacé dans la direction d'un axe de déplacement ou d'un plan de déplacement (62), qui est disposé à plat approximativement parallèlement au plan de guidage (26) dans la position de support (C) dans la région située entre le plan de guidage (26) des tiges de retenue (20, 22) et l'axe de rotation (30).

11. Dispositif appui-tête selon l'une quelconque des revendications 1 à 10, **caractérisé en ce que** la partie d'appui-tête (12) est sollicitée par une force de ressort de torsion (F2) de telle sorte que le pivotement dans un sens de rotation s'effectue à l'encontre de la force de ressort de torsion (F2) et s'effectue essentiellement automatiquement par la force de ressort de torsion (F2) dans l'autre sens de rotation.

12. Dispositif appui-tête selon la revendication 11, **caractérisé en ce que** la force de ressort de torsion (F2) est conçue de telle sorte que la position de support (C) soit atteinte automatiquement après desserrage du blocage à partir de la position de repos (D).

13. Dispositif appui-tête selon les revendications 11 ou 12, **caractérisé en ce que** pour produire la force de ressort de torsion (F2), on prévoit un ressort de torsion (64) réalisé de préférence sous la forme d'un ressort à branches enroulé, qui est disposé de manière supportée entre la partie d'appui-tête (12) et l'élément à tiges de retenue (16) ou la partie de palier (36).

14. Siège de véhicule (2) comprenant une partie d'assise inférieure (6) et un dossier (4) ainsi qu'un dispositif d'appui-tête (8) selon l'une quelconque des revendications 1 à 13, **caractérisé en ce que** le siège de véhicule (2) peut être transféré d'une position d'utilisation inclinée pour s'asseoir dans une position de non utilisation, la partie d'assise (6) pouvant être rabattue d'environ 180° autour d'un axe transversal (66) disposé dans sa région avant éloignée du dossier (4), de telle sorte qu'elle se trouve approximativement dans un plan (72) avec un fond de chargement adjacent du véhicule, avec son côté inférieur (70) alors tourné vers le haut, et le dossier (4) pouvant être renversé d'environ 90° dans la position de non utilisation (B) de la partie d'appui-tête (12) autour d'un axe transversal inférieur (74) dans la direction de la partie d'assise (6) et se trouvant alors avec sa face arrière (78) également approximativement dans le plan (72) du fond de chargement.

15. Siège de véhicule selon la revendication 14, **caractérisé en ce que** le dossier (4) est reçu avec la partie d'appui-tête (12) bloquée dans la position de non utilisation (B) dans la position renversée du dossier dans un logement en forme de creux du véhicule.

16. Siège de véhicule selon la revendication 14 ou 15, **caractérisé en ce que** dans la position de non utilisation, les surfaces (70, 78) tournées vers le haut de la partie d'assise (6) et du dossier (4) se prolongent l'une dans l'autre et dans les régions de surfaces adjacentes du fond de chargement par le biais de seulement une faible fente.

17. Siège de véhicule selon l'une quelconque des revendications 14 à 16, **caractérisé par** une utilisation en tant que siège de secours, notamment dans un agencement orienté vers l'arrière par rapport à la direction de conduite proprement dite, dans la partie arrière du véhicule.
